# DEMANDE DE BREVET EUROPEEN

(11) **EP 0 543 691 A1**
(43) Date de publication de la demande: **26.05.1993**
(21) Numéro de dépôt: 92402925.9
(22) Date de dépôt: 28.10.1992
(51) Int. Cl.: F16L 57/00

(54) **Obturateur pour embouts de tuyauterie ou dispositifs analogues**

(30) Priorité: 22.11.1991 FR 9114440
(71) Demandeur: SOCIETE EUROPEENNE DE PROPULSION, F-92150 Suresnes (FR)
(72) Inventeur: Pido, Jean-Claude, F-27950 Saint Marcel (FR)
(74) Mandataire: Thévenet, Jean-Bruno

(57) **Abrégé**

Obturateur pour embouts de tuyauteries ou dispositifs analogues,constitué d'un corps de recouvrement (1) monobloc en forme de ruban possédant au moins trois zones déformables dont la capacité à supporter des pliages répétés est élevée. Le corps de recouvrement (1) présente une face interne (8) avec une partie conique (9), une face externe (10), une première extrémité (2) munie d'au moins un organe d'accrochage (4,5) et une deuxième extrémité (3) munie d'au moins un orifice (6,7) destiné à recevoir l'organe d'accrochage (4,5), et des premier et second éléments transversaux en saillie (12,13) disposés perpendiculairement à la face interne (8), symétriquement à la partie conique (9), dans des zones de jonction qui délimitent les première et deuxième extrémités (1,2) définissant les moyens de verrouillage de l'obturateur. Les trois zones déformables sont constituées d'une part par des zones situées de part et d'autre de la partie centrale conique (9) et d'autre part par la première extrémité (2) munie d'au moins un organe d'accrochage (4, 5).

## Description

### Domaine de l'invention

La présente invention concerne un obturateur destiné à protéger les embouts de différentes formes existant au niveau des extrémités des tuyauteries ou d'autres dispositifs analogues et à empêcher l'introduction de poussières ou autres corps étrangers à l'intérieur de ces tuyauteries, notamment lors de leur stockage.

### Art antérieur

Il est connu pour protéger les extrémités de tuyauteries contre notamment la pénétration de corps étrangers lors du transport ou de l'entreposage de ces tuyauteries après leur fabrication, d'obturer ou de sceller ces extrémités par des dispositifs plus ou moins complexes, comportant des pièces métalliques, en plastomères ou en élastomères, dont la fixation est en général effectuée au moyen d'assemblages filetés, ou faisant intervenir la déformation élastique de certaines pièces, ou de tout autre moyen.

De tels dispositifs qui sont en principe différents selon qu'ils sont destinés a être montés sur des embouts mâles ou femelles ou bien encore sur des embouts plus spécifiques tels que des tés ou des croix, présentent de plus d'autres inconvénients plus importants comme la rigidité de leur structure qui en limite l'adaptabilité à des tuyauteries de dimensions différentes, la complexité de leur montage qui exclut une mise en oeuvre rapide, et dans la plupart des cas leur conception même qui n'offre aucunement une garantie d'inviolabilité lors du stockage.

On connait ainsi en particulier par le document FR-A-2 064 335 un bouchon pour tubes, flacons et récipients équivalents qui comprend une pièce en forme d'étrier possédant une barrette transversale destinée à venir obturer l'ouverture du tube ou flacon, et deux branches munies de bossages coniques destinés à venir s'articuler dans des trous correspondants ménagés extérieurement à la base du goulot ou embout du tube. Un tel mode de réalisation ne peut cependant être adapté qu'à un type de goulot ou embout de dimensions données et formé de façon spécifique avec des trous de réception de l'étrier. De plus, un élément supplémentaire tel qu'une bague ou un ressort doit être ajouté pour assurer la sécurité du verrouillage de l'étrier sur le tube. L'étrier ne joue par ailleurs qu'un rôle d'obturation de l'orifice du tube ou flacon et n'assure pas de protection de l'embout lui-même contre des chocs ou rayures.

### Objet et description succincte de l'invention

La présente invention a pour objet un obturateur adaptable à différents types de tuyauteries,qui soit simple et bon marché, et dont la mise en oeuvre soit particulièrement aisée tout en garantissant une inviolabilité totale de l'ensemble ainsi créé.

L'invention vise également à réaliser un obturateur qui assure une protection efficace contre les chocs et rayures tout en maintenant, s'il y a lieu, un bon état de propreté interne de la tuyauterie.

Ces buts sont atteints grâce à un obturateur pour embout de tuyauterie ou dispositif analogue qui, selon l'invention, est essentiellement constitué d'un corps de recouvrement monobloc en forme de ruban possédant au moins trois zones déformables dont la capacité à supporter des pliages répétées est élevée, comportant les caractéristiques suivantes :
**a)** le corps de recouvrement présente une face interne, une face externe, une première extrémité munie d'au moins un organe d'accrochage et une deuxième extrémité munie d'au moins un orifice destiné à recevoir et à coopérer avec l'organe d'accrochage,
**b)** le corps de recouvrement comporte une partie centrale conique formée sur ladite face interne,
**c)** le corps de recouvrement comporte des premier et second éléments transversaux en saillie disposés essentiellement perpendiculairement à la face interne, de façon symétrique par rapport à ladite partie centrale conique, dans des zones de jonction distantes de cette partie centrale conique qui délimitent lesdites première et deuxième extrémités définissant les moyens de verrouillage de l'obturateur,
**d)** les trois zones déformables du corps de recouvrement sont constituées d'une part par des première et deuxième zones déformables situées de part et d'autre de ladite partie centrale conique, de façon adjacente à celle-ci, et d'autre part en une troisième zone déformable définie par ladite première extrémité munie d'au moins un organe d'accrochage.

En fonctionnement, la partie centrale conique est centrée sur l'embout de la tuyauterie, le corps de recouvrement étant déformé de manière que les éléments transversaux en saillie viennent entourer cette tuyauterie. L'introduction de la deuxième extrémité du corps dans la première assure le verrouillage du dispositif et interdit l'accès à l'embout de la tuyauterie sauf à rompre cette deuxième extrémité.

La conception monobloc de l'obturateur facilite à la fois la fabrication et le stockage de celui-ci à l'état libre, c'est-à-dire essentiellement plan, et l'utilisation de celui-ci, pour diverses positions de service qui constituent autant de fonctions réalisables avec chaque mode particulierde réalisation, les moyens d'accrochage étant intimement liés aux moyens d'obturation.

La présence de trois zones déformables sur le corps de recouvrement permettent une mise en place rapide sans outillage spécialisé.

La partie centrale conique formée sur la face interne et les premiers et second éléments transversaux en saillie formés perpendiculairement à la face interne permettent une mise en place aisée sur des raccords de tuyauterie traditionnels de diverses dimensions, qui peuvent être aussi bien des raccords mâles que des raccords femelles. Pour un diamètre de la partie conique donné et donc une largeur donnée du corps de recouvrement, il est possible de recouvrir des tuyauteries de dimensions différentes. Avec au plus quatre modèles distincts, il est ainsi possible, compte tenu de la normalisation actuelle des embouts, de recouvrir des tuyauteries qui auparavant nécessitaient l'utilisation de plus de quarante modèles différents (vingt modèles mâles et autant de modèles femelles).

Selon un premier mode de réalisation, le corps de recouvrement, comporte en outre sur la face externe un élément cylindrique disposé en correspondance avec la partie conique de la face interne, afin de permettre facilement l'obturation d'embouts spécifiques du type té ou croix par exemple, à l'aide dudit élément cylindrique, aussi bien que de raccords plus traditionnels à l'aide de ladite partie conique.

Selon un deuxième mode de réalisation, le corps de recouvrement comporte en outre sur sa face externe une deuxième partie conique saillante disposée en correspondance avec la première partie conique de la face interne.

Il est ainsi possible, à l'aide de la deuxième partie conique, d'assurer une obturation étanche d'embouts du type té ou croix tandis que les raccords traditionnels peuvent être obturés de façon étanche à l'aide de la première partie conique de la face interne. Un tel obturateur peut ainsi être qualifié d'universel grâce aux diverses fonctions qui peuvent être réalisées en position de service, repliée, à partir d'un obturateur monobloc unique simple à réaliser à l'état libre.

Afin d'améliorer la protection, ledit corps de recouvrement peut comporter également des parois longitudinales formant saillies et disposées perpendiculairement à ladite face interne et à angle droit avec lesdits premier et deuxième éléments transversaux en saillie, au voisinage des rebords du ruban dans les zones intermédiaires déformables, planes et rectangulaires, entre la partie centrale conique et lesdites zones de jonction.

Avantageusement, un faible espace libre est formé entre les parois longitudinales en saillie et les éléments transversaux en saillie.

La partie centrale conique peut comporter sur sa face externe des nervures de renforcement dont les extrémités libres viennent au niveau de ladite face externe.

La deuxième extrémité munie d'au moins un orifice peut également comporter une ou plusieurs nervures de renforcement.

Selon un mode particulier de réalisation, lesdits éléments transversaux en saillie sont constitués par des éléments en coin comportant chacun au moins une cavité.

Lesdits éléments transversaux en saillie comportent une échancrure centrale à leur partie supérieure en forme de V très ouvert, et respectant la symétrie longitudinale de l'obturateur.

Selon un mode particulier de réalisation, ledit organe d'accrochage formé sur ladite première extrémité comprend deux pattes crantées et ladite deuxième extrémité comprend deux orifices pour recevoir lesdites pattes crantées.

Le corps de recouvrement peut en outre comporter sur ladite face interne des amorces de pliage disposées de part et d'autre de ladite partie conique parallèlement aux éléments transversaux en saillie, pour contribuer à définir lesdites première et deuxième zones déformables.

Le corps de recouvrement peut aussi comporter sur ladite face externe des amorces de pliage disposées de part et d'autre dudit élément cylindrique en correspondance avec lesdits amorces de pliage formées sur la face interne.

L'obturateur selon l'invention peut être réalisé facilement en matière plastique moulée par injection, ce qui permet une fabrication peu coûteuse en grande série.

Les obturateurs selon l'invention peuvent être stockés très facilement à plat et présentent ainsi un faible encombrement. Leur caractère universel permet également de disposer d'un même type d'obturateur pour des embouts de dimensions et de type différents. Un même obturateur de par sa partie conique interne, peut s'adapter aussi bien sur des raccords mâles que sur des raccords femelles. La partie cylindrique externe ou la deuxième partie conique externe permettent en outre d'utiliser le même obturateur pour des raccords plus complexes tels que des tés.

La mise en place d'un obturateur en forme de collier selon l'invention est particulièrement simple, puisqu'il suffit de coiffer le raccord à l'aide de l'obturateur, de rabattre les deux parties latérales du corps en forme de ruban, et d'assurer un verrouillage de l'obturateur par insertion d'organes d'accrochage tels que des pattes crantées formées à une première extrémité de l'obturateur dans des orifices récepteurs formés à la deuxième extrémité de l'obturateur.

### Brève description des dessins

D'autres caractéristiques et avantages de l'invention ressortiront mieux de la description détaillée de modes particuliers de réalisation, donnés à titre d'exemples en référence aux dessins figurant en annexe, sur lesquels :
La figure 1 représente une vue artistique en perspective de l'obturateur selon l'invention,
La figure 2 est une vue en coupe longitudinale d'un exemple d'obturateur selon l'invention prise selon les lignes II-II des figures 3 et 4,
Les figures 3 et 4 sont des vues respectivement selon les flèches B et C de la figure 2,
Les figures 5 et 6 représentent respectivement une vue en coupe tranversale selon la ligne V-V de la figure 6 et une vue de dessous de l'obturateur objet des figures 1 à 4 obturant un embout mâle ou femelle d'une tuyauterie,
La figure 7 représente une vue en coupe transversale de l'obturateur objet des figures 1 à 4, l'obturateur étant replié dans le sens inverse de celui de la figure 5 pour obturer un embout en té d'une tuyauterie.
La figure 8 représente une vue en plan de la face interne d'un obturateur selon un deuxième mode de réalisation de l'invention,
La figure 9 est une vue en coupe selon la ligne IX-IX de la figure 8,
La figure 10 est une vue en plan analogue à celle de la figure 8 montrant une variante de réalisation,
La figure 11 est une vue en coupe selon la ligne XI-XI de la figure 10, et
La figure 12 est une vue en perspective d'une variante de réalisation de moyens d'accrochage d'un obturateur selon l'invention.

### Description détaillée de modes particuliers de réalisation

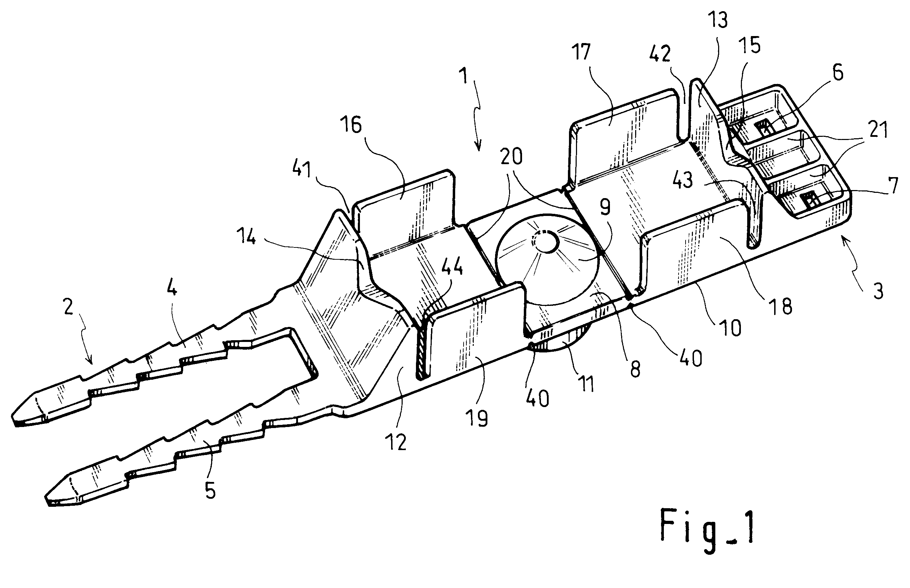

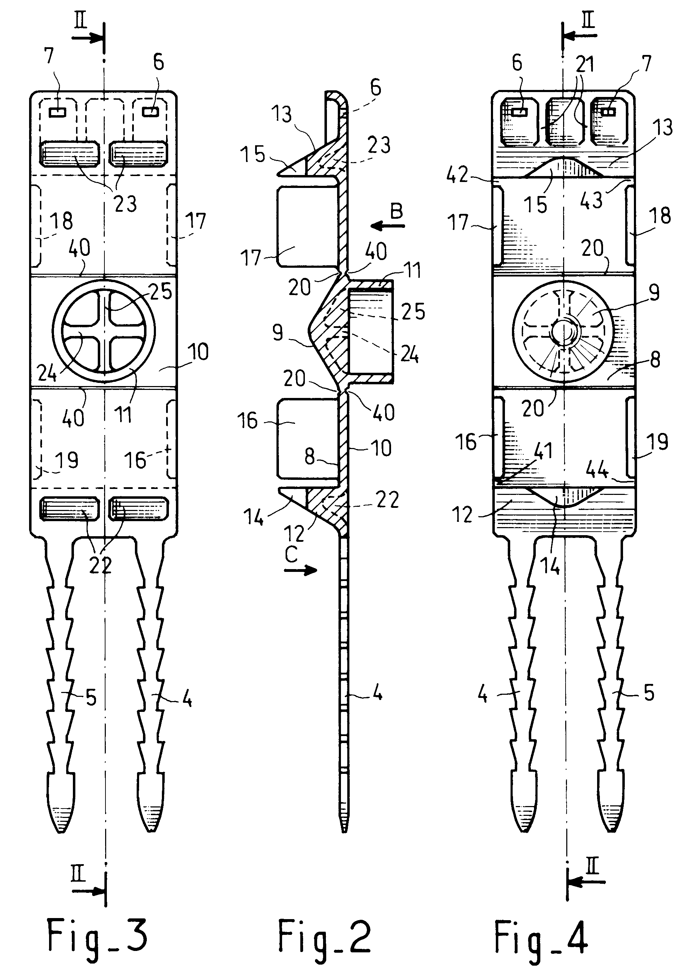

Il est tout d'abord fait essentiellement référence à la figure 1 qui est une vue en perspective d'un obturateur selon l'invention, ainsi qu'aux figures 2 à 4.

L'obturateur se présente sous la forme d'un corps de recouvrement 1 monobloc essentiellement constitué d'une portion de ruban présentant des saillies, et comportant deux extrémités 2 et 3. L'une des extrémités 2 déformable, comprend deux pattes crantées 4 et 5 tandis que l'autre extrémité 3 comprend deux orifices 6 et 7 destinés à recevoir et à coopérer avec ces deux pattes crantées 4 et 5. Le corps 1 possède sur une surface interne 8 et en son centre une partie conique 9. Un élément cylindrique 11 est avantageusement réalisé sur une face externe 10 de ce corps 1 en correspondance avec la partie conique 9.

Le corps de recouvrement 1 est symétrique par rapport à un plan perpendiculaire longitudinal passant par le centre de la partie conique 9, et situé à égale distance des bords du ruban.

Dans des zones de jonction délimitant les parties d'extrémité 2 et 3 sont disposés, perpendiculairement à la face interne 8, deux éléments transversaux 12 et 13 qui sont pourvus respectivement à leur partie supérieure d'une échancrure 14 et 15 en forme de V très ouvert, et respectant la symétrie du corps 1, et qui définissent des cloisons essentiellement perpendiculaires au plan de base du ruban, en présentant des sections de forme essentiellement triangulaire dans le sens longitudinal du ruban. Les éléments transversaux en forme de coin selon une section par le plan de symétrie du corps de recouvrement 12, 13 sont formés à une certaine distance de part et d'autre de la partie conique centrale 9. Des parois longitudinales 16, 17, 18 et 19 formant saillies sont disposées perpendiculairement à la face interne 8, au voisinage des bords longitudinaux du corps 1 à l'exception de sa partie centrale conique 9 et de ses extrémités 2 et 3, et forment un angle droit avec les éléments transversaux en forme de coin 12 et 13 tout en ménageant un faible espace libre 41, 42, 43, 44 avec ces derniers. Ces parois longitudinales 16 à 19 permettent de mieux protéger la partie cylindrique d'un raccord mais peuvent être omises dans certains cas par mesure de simplification.

Des premières amorces de pliage transversales 20 peuvent être prévues sur la face interne 8 du corps 1 à peu près tangentiellement à la partie conique centrale 9 entre les parois 16 et 19 d'une part et les parois 17 et 18 d'autre part, parallèlement aux éléments en coin 12 et 13. Ces amorces de pliage contribuent à définir des zones intermédiaires déformables, planes et rectangulaires, de part et d'autre de la partie conique centrale 9 si le matériau n'est pas par nature suffisamment flexible

Une ou plusieurs nervures de renforcement 21 peuvent être formées au niveau de l'extrémité 3 comportant les orifices 6 et 7. De même des cavités 22 et 23 (voir les figures 2 et 3) peuvent être prévues dans les éléments cunéiformes 12 et 13.

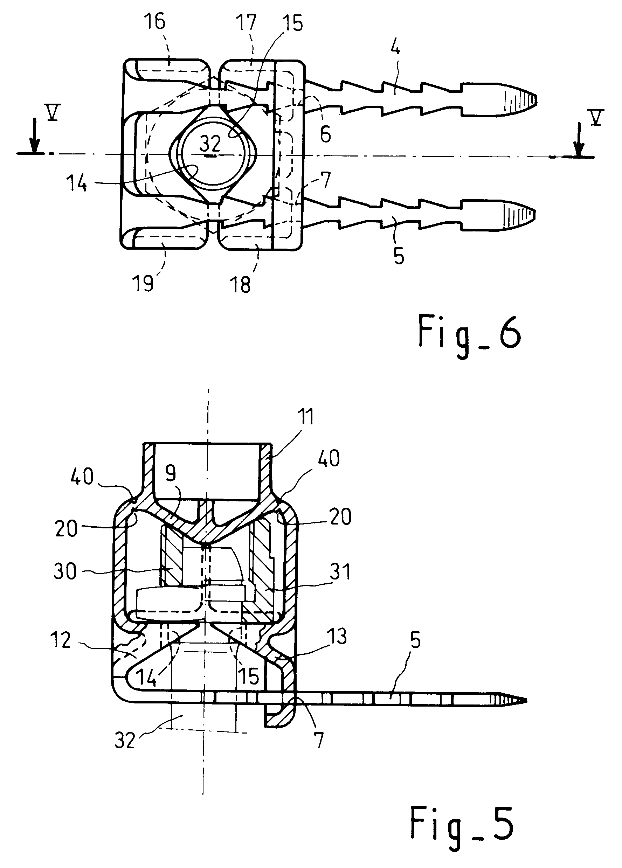

La figure 2 représente une coupe longitudinale par son plan de symétrie de l'obturateur selon l'invention de la figure 1. Les éléments communs avec cette figure portent les mêmes repères. Il est représenté explicitement les cavités 22 et 23 pratiquées respectivement dans les éléments transversaux cunéiformes 12 et 13. A l'intérieur de la partie conique 9 sont disposées en croix deux nervures de soutien 24 et 25 dont les extrémités libres viennent au niveau de la face externe 10 au fond de l'élément cylindrique 11, lorsque celui-ci existe. Les figures 3 et 4 sont des vues en plan selon les flèches B et C de la figure 2 sur lesquelles figurent les éléments décrits précédemment. Le fonctionnement du dispositif selon l'invention sera maintenant décrit en regard des figures 5 et suivantes.

La figure 5 montre un dispositif selon l'invention obturant une tuyauterie comportant, pour les besoins de la représentation, un embout moitié mâle 30 et moitié femelle 31 dessiné en traits fins.

L'obturateur selon l'invention est en effet, au contraire des dispositifs de l'art antérieur, applicable aussi bien aux raccords mâles qu'aux raccords femelles des tuyauteries. Son installation nécessite tout d'abord de centrer la partie conique 9 du corps de recouvrement 1 sur l'extrémité 30 et 31 de la tuyauterie. Il faut observer que pour un diamètre de la partie conique 9 donne et donc une largeur du corps 1 donnée, il est possible de recouvrir des tuyauteries de dimensions différentes. Ainsi,par exemple, avec au plus quatre modèles distincts il sera possible de recouvrir des tuyauteries qui auparavant nécessitaient l'utilisation de plus de quarante modèles différents (une vingtaine de modèles mâles et autant de modèles femelles).

Ce corps de recouvrement 1 est ensuite déformé dans une direction perpendiculaire à sa face interne 8, les premières amorces de pliage 20 facilitant cette déformation, de telle sorte que les éléments transversaux en coin 12 et 13 viennent s'insérer sous l'embout mâle 30 ou femelle 31. Les pattes crantées 4 et 5 sont alors introduites dans les orifices respectifs 6 et 7 et tirées simultanément vers l'extérieur pour assurer la fixation totale et auto verrouillée du dispositif. Cette action permet en même temps un léger pivotement des éléments transversaux en coin 12 et 13 qui peuvent ainsi compenser les légères différences existant dans la hauteur des raccords, tandis que les échancrures 14 et 15 viennent entourer le corps de la tuyauterie 32. Le système de crantage anti-retour sur les tiges 4 et 5 assure l'inviolabilité du dispositif, l'accès à l'embout ou raccord ne pouvant être réalisé à nouveau qu'en coupant les pattes de l'obturateur selon l'invention.

Les parois longitudinales 16,17,18,19 dont la présence n'est pas obligatoire dans toutes les applications possibles de l'obturateur selon l'invention permettent en entourant entièrement l'embout, d'assurer une protection supplémentaire contre les chocs ou les rayures.

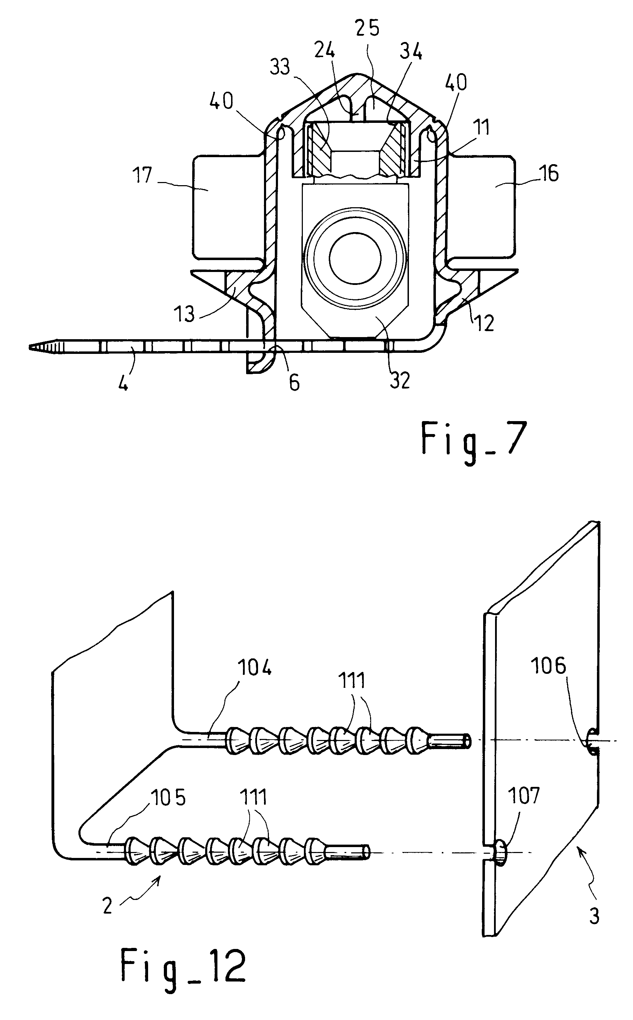

La figure 7 montre un autre exemple d'utilisation de l'obturateur selon les figures 1 à 4, qui est muni d'une partie cylindrique 11. Une tuyauterie 32 est munie d'un té dont l'embout 33 est à obturer. Pour cela cet embout 33 est préalablement recouvert par l'élément cylindrique 11, les nervures de renforcement 24 et 25 pouvant venir en contact avec le bord supérieur 34 de cet embout 33. Le corps de recouvrement 1 est ensuite déformé dans une direction perpendiculaire à sa face externe 10, des secondes amorces de pliage 40, disposées de manière analogue aux premières amorces de pliage 20 mais sur la face opposée, facilitant cette déformation dans le sens opposé de celui de l'utilisation précédente. Par cette disposition, les éléments transversaux en coin 12 et 13 se retrouvent donc, contrairement à cette utilisation précédente, dirigés vers l'extérieur du corps de la tuyauterie 32 et ne jouent alors pas de rôle mécanique particulier. Comme précédement les tiges crantées 4 et 5 sont ensuite introduites dans les orifices 6 et 7 prévus à cet effet et tirées vers l'extérieur pour assurer le verrouillage en position complet du dispositif. Les parois supplémentaires optionnelles 16, 17, 18, 19 n'assurent plus ici aucune fonction particulière.

Il peut être noté que l'élément cylindrique 11 qui n'assure aucune fonction particulière dans le cas d'obturation d'embouts classiques mâles ou femelles et peut donc être omis pour ces utilisations est tout-à-fait utile, quoique non absolument indispensable dans tous les cas, dans l'utilisation de la figure 7 notamment pour assurer une meilleure protection du raccord contre l'introduction de corps étrangers, mais surtout pour protéger ce raccord des chocs et des rayures

Dans tous les cas de montage, qu'il s'agisse de raccords classiques ou de raccords plus complexes comme des tés, le dispositif selon l'invention autorise une mise en oeuvre particulièrement rapide. Le montage est aisé, sans outillage spécifique, le simple retournement du dispositif permettant son adaptation des raccords classiques aux raccords de type té et vice versa.

Contrairement aux dispositifs de l'art antérieur, le dispositif selon l'invention, ne pose pas de problème de stockage et peut être empilé à plat sans aucune difficulté, la hauteur de chaque obturateur correspondant à celle des parois transversales 12,13 ou longitudinales 16 à 19.

L'obturateur selon l'invention peut être réalisé facilement en matière plastique d'une seule pièce, par exemple par moulage par injection.

Le type de matériau utilisé pour la réalisation du dispositif selon l'invention, doit être choisi en fonction des conditions requises pour le maintien de la propreté interne de la tuyauterie. L'étanchéité peut être en effet de plus ou moins bonne qualité selon l'état de surface du matériau, sa dureté, ainsi que selon la rigueur de la géométrie et la présence ou non de nervures.

Les matériaux utilisés ne doivent pas être trop durs pour permettre le retournement du dispositif et présenter la flexibilité suffisante pour définir au moins trois zones déformables et s'adapter à des embouts de longueurs quelque peu différentes, mais ne doivent pas non plus générer des particules en aucune circonstance, et notamment lors du montage. On utilisera de préférence des matériaux présentant une bonne résistance tant aux solvants qu'au vieillissement et capables de supporter, dans les limites des dimensions des zones déformables, des pliages à 90° sans rupture après plusieurs années ou après un grand nombre de montages et démontages. Des matières plastiques telles que celles connues sous la marque "nylon" de la Société Du Pont de Nemours, qui se prètent bien à un moulage par injection conviennent en général bien au dispositif selon l'invention.

Les matériaux suivants sont bien adaptés à la réalisation d'obturateurs conformes à l'invention, le choix d'un matériau particulier dépendant des applications perticulières envisagées, et notamment de la résistance nécessaire à des agressions chimiques :
- Polyéthylène haute densité avec agents anti-U.V. (PEhd), tel que le matériau connu sous la marque "Hostalen" de la Société HOECHST.
   Ce type de matériau présente une grande inertie chimique et peut être utilisé dans des environnements allant de - 80[C à + 110[C.
- Polyamide avec agents anti-UV (PA 11), tel que le matériau connu sous la marque "Rilsan" de la société ATO chimie.
   Ce type de matériau présente une bonne résistance chimique et peut être utilisé dans des environnements allant de - 70[C à + 110[C.
- Polyacétal avec agents anti-UV (POM), tel que le matériau connu sous la marque "Delrin" de la Société Du Pont de Nemours ou le matériau connu sous la marque "Hostaform" de la société HOECHST
   Ce type de matériau est sensible aux lessives et aux acides mais peut être utilisé dans un environnement allant de -60[C à + 120[C.
- Polypropylène copolymère (PPPE), notamment commercialisé par la société HOECHST. Ce type de matériau présente une très bonne résistance aux produits chimiques et peut être utilisé dans une plage de températures allant de - 30[C à + 120[C environ.

Le dispositif selon l'invention est à la fois facile à fabriquer et simple à mettre en oeuvre tout en étant d'un coût particulièrement faible.

Le dispositif d'obturation selon l'invention ne permet bien évidemment pas que la protection des embouts illustrés précédement (mâle, femelle, té) mais bien d'autres types de raccords tels que les croix, mamelons à souder, raccord toriques, par exemple

Dans le mode de réalisation décrit en reférence aux figures 1 à 4, l'obturateur présente sur sa face externe une collerette cylindrique 11 qui, dans la position de service représentée sur la figure 7, assure une protection de raccords en forme de té par exemple.

Comme on l'a déjà indiqué, un obturateur selon une version simplifiée pourrait ne pas comporter de collerette 11 et serait alors utilisable essentiellement pour l'obturation et la protection de raccords mâles ou femelles classiques, par sa face interne munie de la partie conique 9 et des éléments transversaux en saillies 12, 13.

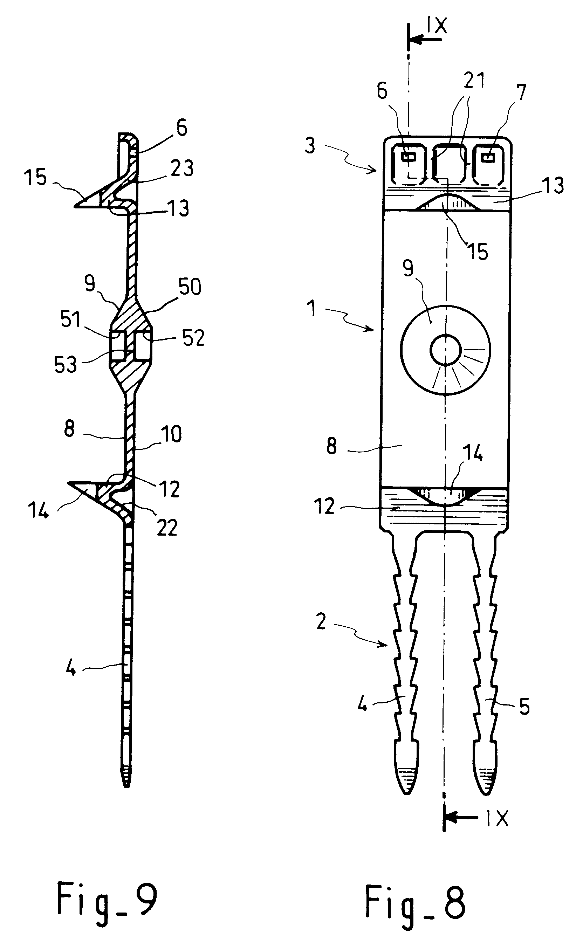

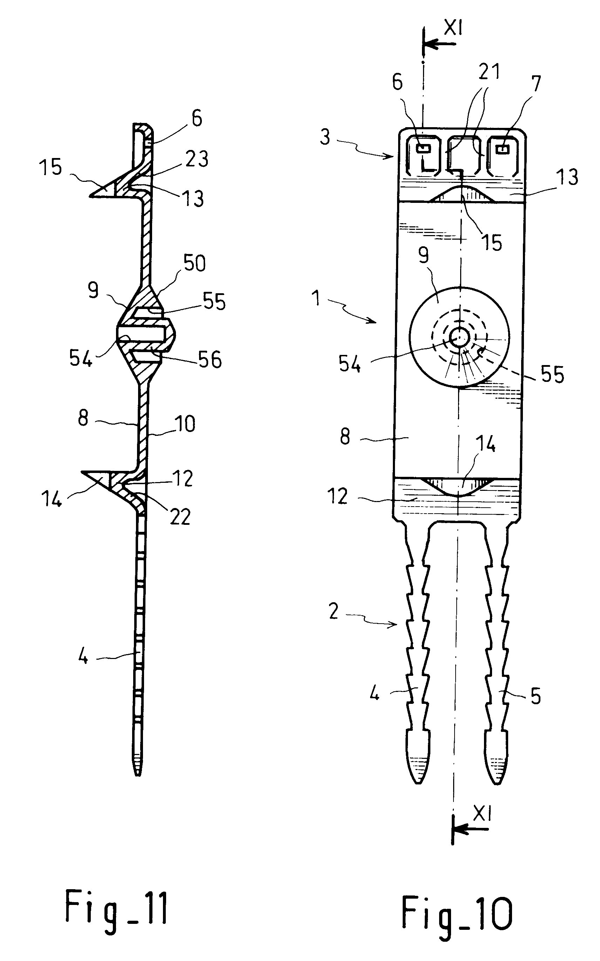

L'obturateur selon l'invention peut cependant également offrir une protection plus étanche pour des raccords en forme de té, grâce à la présence, sur la face externe 10 du corps de recouvrement 1, non pas d'une collerette cylindrique 11, mais d'une deuxième partie conique saillante 50 disposée en correspondance avec la première partie conique 9 de la face interne 8. Ce deuxième mode de réalisation est représenté dans une première configuration sur les figures 8 et 9 et dans une deuxième configuration sur les figures 10 et 11.

Dans le mode de réalisation des figures 8 et 9, les éléments communs avec celui des figures 1 à 4 portent les mêmes numéros de référence et ne seront pas décrits de nouveau. La deuxième partie conique 50 peut être réalisée de façon symétrique par rapport à la première partie conique 9. Dans ce cas, des portions évidées 51, 52 peuvent être réalisées dans les zones centrales non opérationnelles des parties coniques 9 et 50, seule une partie centrale 53 de liaison devant être conservée dans le plan du corps de recouvrement 1.

Les figures 10 et 11 montrent une variante de réalisation dans laquelle comme sur les figures 8 et 9, une deuxième partie conique saillante 50 est réalisée sur la face externe 10 du corps de recouvrement 1, en correspondance avec la première partie conique 9 formée sur la face interne 8. Dans le cas des figures 10 et 11, les évidements formés dans les zones non opérationnelles des parties coniques 9 et 50 ne sont cependant pas symétriques, mais imbriquées l'une dans l'autre pour faciliter les opérations de démoulage. La partie conique 9 peut ainsi présenter un évidement central 54 délimité par une paroi cylindrique 56 et dont le fond définit la partie centrale de la partie conique externe 50, tandis qu'un évidement 55 coaxial à l'évidement central 54 est formé dans la portion définissant la partie conique externe 50.

Diverses modifications et adjonctions peuvent être apportées aux dispositifs d'obturation qui viennent d'être décrits, sans sortir du cadre de l'invention.

Ainsi, le type de moyens d'accrochage décrit en référence aux figures 1 à 11 définit un obturateur jetable, l'inviolabilité du système nécessitant en effet de couper les pattes 4, 5 du dispositif pour enlever celui-ci et avoir à nouveau accès à l'intérieur de la tuyauterie.

Pour certaines applications, il n'est pas nécessaire que l'obturateur soit inviolable et il peut être au contraire souhaité de pouvoir réutiliser celui-ci. Dans ce cas, les organes d'accrochage peuvent être réalisés de façon différente

A titre d'exemple de moyen d'accrochage réutilisable, on a représenté sur la figure 12 des pattes d'accrochage 104, 105 qui ne sont pas planes mais constituées de crans cylindro-coniques 111 pouvant être introduits latéralement dans des encoches 106, 107 de forme correspondante adaptée, qui jouent le rôle des orifices 6, 7, mais présentent une ouverture latérale d'une dimension légèrement inférieure aux parties cylindriques des crans 111 pour permettre l'insertion et le retrait des pattes 104, 105 avec un faible effort. D'autres variantes de moyens d'accrochages intégrés à un corps monobloc sont toutefois également possibles

## Revendications

1. Obturateur pour embouts de tuyauteries ou dispositifs analogues, caractérisé en ce qu'il est essentiellement constitué d'un corps de recouvrement (1) monobloc en forme de ruban possédant au moins trois zones déformables dont la capacité à supporter des pliages répétés est élevée , le corps de recouvrement (1) présentant une face interne (8), une face externe (10), une première extrémité (2) munie d'au moins un organe d'accrochage (4,5) et une deuxième extrémité (3) munie d'au moins un orifice (6,7) destiné à recevoir et à coopérer avec ledit organe d'accrochage (4,5), ledit corps de recouvrement (1) comportant une partie centrale conique (9) formée sur ladite face interne (8), et des premier et second éléments transversaux en saillie (12,13) disposés essentiellement perpendiculairement à la face interne (8), de façon symétrique par rapport à ladite partie centrale conique (9), dans des zones de jonction distantes de cette partie centrale conique (9) qui délimitent lesdites première et deuxième extrémités (1,2) définissant les moyens de verrouillage de l'obturateur, et lesdites trois zones déformables du corps de recouvrement (1) étant constituées d'une part par des première et deuxième zones déformables situées de part et d'autre de ladite partie centrale conique (9), de façon adjacente à celle-ci, et d'autre part par une troisième zone déformable définie par ladite première extrémité (2) munie d'au moins un organe d'accrochage (4, 5).

2. Obturateur selon la revendication 1, caractérisé en ce que le dit corps de recouvrement (1), comporte en outre sur ladite face externe (10) un élément cylindrique (11) disposé en correspondance avec ladite partie conique (9) de ladite face interne (8).

3. Obturateur selon la revendication 1, caractérisé en ce que ledit corps de recouvrement (1) comporte en outre sur ladite face externe (10) une deuxième partie conique (50) saillante disposée en correspondance avec la première partie conique (9) de ladite face interne (8).

4. Obturateur selon l'une quelconque des revendications 1 à 3, caractérisé en ce que ledit corps de recouvrement (1) comporte également des parois longitudinales (16, 17, 18, 19) formant saillies et disposées perpendiculairement à ladite face interne (8) et à angle droit avec lesdits premier et deuxième éléments transversaux en saillie (12,13), au voisinage des rebords du ruban dans les zones intermédiaires déformables, planes et rectangulaires, entre la partie centrale conique (9) et lesdites zones de jonction.

5. Obturateur selon l'une quelconque des revendications 1 à 4, caractérisé en ce que ladite partie centrale conique (9) comporte sur sa face externe des nervures de renforcement (24,25) dont les extrémités libres viennent au niveau de la face externe (10).

6. Obturateur selon l'une quelconque des revendications 1 à 5, caractérisé en ce que ladite deuxième extrémité (3) munie d'au moins ledit orifice (6,7) comporte également au moins une nervure de renforcement (21).

7. Obturateur selon l'une quelconque des revendications 1 à 6, caractérisé en ce que lesdits éléments transversaux en saillie (12,13) sont constitués par des éléments en coin comportant chacun au moins une cavité (22,23).

8. Obturateur selon l'une quelconque des revendications 1 à 7, caractérisé en ce que lesdits éléments transversaux en saillie (12,13) comportent une échancrure centrale (14,15) à leur partie supérieure en forme de V très ouvert, et respectant la symétrie longitudinale de l'obturateur.

9. Obturateur selon l'une quelconque des revendications 1 à 8, caractérisé en ce que ledit corps de recouvrement (1) comporte sur ladite face interne (8) des amorces de pliage (20) disposées de part et d'autre de ladite partie conique (9) parallèlement aux éléments transversaux en saillie (12, 13), contribuant à définir lesdites première et deuxième zones déformables.

10. Obturateur selon les revendications 2 et 9, caractérisé en ce que ledit corps de recouvrement (1) comporte sur ladite face externe (10) des amorces de pliage (40) disposées de part et d'autre dudit élément cylindrique (11) en correspondance avec lesdites amorces de pliage (20) formées sur la face interne (8).

11. Obturateur selon l'une quelconque des revendications 1 à 10, caractérisé en ce que ledit organe d'accrochage formé sur ladite première extrémité (2) comprend deux pattes crantées (4,5) et en ce que ladite deuxième extrémité (3) comprend deux orifices (6,7) pour recevoir lesdites pattes crantées (4,5)

12. Obturateur selon la revendication 4, caractérisé en ce qu'un faible espace libre (41 à 44) est formé entre les parois longitudinales en saillie (16 à 19) et les éléments transversaux en saillie (12, 13).

13. Obturateur selon l'une quelconque des revendications 1 à 12, caractérisé en ce qu'il est réalisé en matière plastique moulée par injection.
